# EUROPEAN PATENT APPLICATION

(11) **EP 1 772 061 A1**
(43) Date of publication of application: **11.04.2007**
(21) Application number: 05110651.6
(22) Date of filing: 11.11.2005
(51) Int. Cl.: A23K 1/18, A23K 1/00, A23K 1/10, A23K 1/14

(54) **Method for producing fish food, and fish food obtained using this method**

(30) Priority: 08.10.2005 NL 1030144
(71) Applicant: Van Gerven B.V., 5692 HK Son (NL)
(72) Inventor: Van Erp, Hubertus Adrianus, 5691 AE, Son (NL)
(74) Representative: Schumann, Bernard Herman Johan

(57) **Abstract**

A method for producing fish food, which method comprises the following steps, to be performed in suitable sequence, of:
(a) providing porous dry grains with open structure, which grains comprise vegetable ingredients and/or animal ingredients;
(b) providing a mixture consisting of a mass of finely ground fresh or live fish food;
(c) impregnating the grains according to step (a) with the fish food according to step (b);
(d) preserving the thus obtained impregnated grains, for instance by freezing and keeping the grains frozen, freeze-drying the grains or air-drying the grains.

## Description

The invention relates to a method for producing fish food. It is known to manufacture extruded grains of dry food. Also known is ground fresh or live fish food, this latter being commercially available in, among other forms, compartmentalized packages which can be stored in a freezer.

It is an object of the invention to combine the advantages of the two stated types of fish food, which can improve the efficiency of feeding fish. Particularly the combination of fresh or live fish food with dry grains has the advantage that the fish are quickly enticed by the fresh or live fish food, which can be detected at a great distance by fish, wherein the cheaper ingredients of the dry grain are effectively also eaten during feeding.

The invention provides a method for producing fish food, which method comprises the following steps, to be performed in suitable sequence, of:
(a) providing porous dry grains with open structure, which grains comprise vegetable ingredients and/or animal ingredients;
(b) providing a mixture consisting of a mass of finely ground fresh or live fish food;
(c) impregnating the grains according to step (a) with the fish food according to step (b);
(d) preserving the thus obtained impregnated grains.

Preserving can take place in different ways. The method can for instance comprise step (e) of performing step (d) by freezing and keeping the grains frozen, for instance up to a temperature of less than -15°C.

It can also comprise step (f) of performing step (d) by freeze-drying the grains. It can further comprise step (g) of performing step (d) by air-drying the grains.

The method is preferably embodied such that the ingredients for the vegetable grains according to step (a) are chosen from the group to which belong: vegetables, grains, flour, seeds, grasses, herbs, vegetable oil, and/or the ingredients for the animal grains are chosen from the group to which belong fish meal and fish oil.

According to another aspect, the invention has the special feature that the fresh or live fish food is chosen from the group to which belong: red mosquito larvae, white mosquito larvae, black mosquito larvae, cyclops, daphnia, bosmides, red plankton, micro-plankton, artemia, mysis, krill pacifica, krill superba, green fodder, mussel meat, roe, cockle meat, beef heart, spleen, shrimp meat, shrimp paste, gammarus, tubifex, crab eggs and squid.

It is of great importance that the impregnation treatment takes place effectively such that an intimate mixing of the fresh or live fish food and the dry grains takes place. For this purpose the method preferably comprises step (h) of performing step (c) by
(h.1) mixing the mass according to step (b) with the dry grains according to step (a) such that at least a part of this mass becomes attached to the surface of the grains through adhesion and there penetrates superficially through capillary action;
(h.2) placing the mixture obtained in (h.1) into an airtight closable chamber;
(h.3) reducing the air pressure in the chamber substantially, for instance to 0.3 bar;
(h.4) restoring the atmospheric air pressure in the chamber, whereby the mass adhered to the grains penetrates deeply into the pores of the grains and the grains thus become impregnated therewith; and
(h.5) removing the thus impregnated grains from the chamber.

Of further importance can be a method comprising step (i) of manufacturing the dry grains according to step (a) by
(i.1) extruding a pasty basic mass consisting of the ingredients chosen therefor, while supplying air;
(i.2) forming the extrudate into grains; and
(i.3) drying the grains according to step (i.2) or drying the extrudate prior to performing step (i.2).

To make the extrusion operation as effective as possible and provide the option of also feeding the fish food according to the invention to small and even very small fish, the method can comprise step (j) of performing step (b) such that the fish food is finely ground in advance to a particle size of a maximum of 30 µm, preferably a maximum of 10 µm.

A favourable mixing ratio here is generally found to be that the ratio of the mass of the dry grains and the fresh or live fish food lies substantially in the range of (60 ± 15)% : (40 ± 15) %.

In order to enable marketing of the fish food obtained with any of the above specified methods, use is preferably made of step (k) of portioning and packaging the produced fish food in suitable manner.

Finally, the invention relates to fish food obtained by applying a method of the above specified type. This fish food comprises porous grains with an open structure, which grains are impregnated with fresh or live fish food and preserved.

## Claims

1. Method for producing fish food, which method comprises the following steps, to be performed in suitable sequence, of:
(a) providing porous dry grains with open structure, which grains comprise vegetable ingredients and/or animal ingredients;
(b) providing a mixture consisting of a mass of finely ground fresh or live fish food;
(c) impregnating the grains according to step (a) with the fish food according to step (b);
(d) preserving the thus obtained impregnated grains.

2. Method as claimed in claim 1, comprising the step of
(e) performing step (d) by freezing and keeping the grains frozen, for instance up to a temperature of less than -15°C.

3. Method as claimed in claim 1, comprising the step of
(f) performing step (d) by freeze-drying the grains.

4. Method as claimed in claim 1, comprising the step of
(g) performing step (d) by air-drying the grains.

5. Method as claimed in any of the foregoing claims, wherein the ingredients for the vegetable grains according to step (a) are chosen from the group to which belong: vegetables, grains, flour, seeds, grasses, herbs, vegetable oil, and/or the ingredients for the animal grains are chosen from the group to which belong fish meal and fish oil.

6. Method as claimed in any of the foregoing claims, wherein the fresh or live fish food is chosen from the group to which belong: red mosquito larvae, white mosquito larvae, black mosquito larvae, cyclops, daphnia, bosmides, red plankton, micro-plankton, artemia, mysis, krill pacifica, krill superba, green fodder, mussel meat, roe, cockle meat, beef heart, spleen, shrimp meat, shrimp paste, gammarus, tubifex, crab eggs and squid.

7. Method as claimed in any of the foregoing claims, comprising the step of
(h) performing step (c) by
(h.1) mixing the mass according to step (b) with the dry grains according to step (a) such that at least a part of this mass becomes attached to the surface of the grains through adhesion and there penetrates superficially through capillary action;
(h.2) placing the mixture obtained in (h.1) into an airtight closable chamber;
(h.3) reducing the air pressure in the chamber substantially, for instance to 0.3 bar;
(h.4) restoring the atmospheric air pressure in the chamber, whereby the mass adhered to the grains penetrates deeply into the pores of the grains and the grains are thus impregnated therewith; and
(h.5) removing the thus impregnated grains from the chamber.

8. Method as claimed in any of the foregoing claims, comprising the step of
(i) manufacturing the dry grains according to step (a) by
(i.1) extruding a pasty basic mass consisting of the ingredients chosen therefor, while supplying air;
(i.2) forming the extrudate into grains; and
(i.3) drying the grains according to step (i.2) or drying the extrudate prior to performing step (i.2).

9. Method as claimed in any of the foregoing claims, comprising the step of
(j) of performing step (b) such that the fish food is finely ground in advance to a particle size of a maximum of 30 µm, preferably a maximum of 10 µm.

10. Method as claimed in any of the foregoing claims, wherein the ratio of the mass of the dry grains and the fresh or live fish food lies substantially in the range of (60 ± 15)% : (40 ± 15)%.

11. Method as claimed in any of the foregoing claims, comprising the step of
(k) portioning and packaging the produced fish food in suitable manner.

12. Fish food obtained by applying a method as claimed in any of the foregoing claims, comprising porous grains with an open structure, which grains are impregnated with fresh or live fish food and preserved.
